(19) Europäisches Patentamt
European Patent Office
Office européen des brevets

(11) EP 4 296 080 A1

(12) **EUROPEAN PATENT APPLICATION**

(43) Date of publication:
**27.12.2023 Bulletin 2023/52**

(21) Application number: **23173425.2**

(22) Date of filing: **15.05.2023**

(51) International Patent Classification (IPC):
***B60C 1/00*** *(2006.01)* ***C08C 19/22*** *(2006.01)*
***C08C 19/44*** *(2006.01)* ***C08F 236/06*** *(2006.01)*
***C08F 236/10*** *(2006.01)* ***C08L 7/00*** *(2006.01)*
***C08L 15/00*** *(2006.01)* ***C08L 9/06*** *(2006.01)*

(52) Cooperative Patent Classification (CPC):
(C-Sets available)
**C08F 236/06; B60C 1/0016; C08C 19/22; C08C 19/44; C08F 236/10; C08L 9/06; C08L 15/00**

(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.06.2022 JP 2022101544**

(71) Applicant: **Sumitomo Rubber Industries, Ltd.**
**Kobe-shi, Hyogo 651-0072 (JP)**

(72) Inventor: **NAKAMURA, Kentaro**
**Kobe-shi, Hyogo, 651-0072 (JP)**

(74) Representative: **Manitz Finsterwald**
**Patent- und Rechtsanwaltspartnerschaft mbB**
**Martin-Greif-Strasse 1**
**80336 München (DE)**

(54) **TIRE**

(57) Provided is a tire which improves steering stability during highspeed running and the tire has a tread portion, wherein the cap rubber layer forming the tread portion is formed from a rubber composition containing 40 parts by mass or more and 60 parts by mass or less of styrene-butadiene rubber (SBR) with a styrene content of 25% by mass or less in 100 parts by mass of the rubber component, and 100 parts by mass or more of silica with respect to 100 parts by mass of the rubber component; and the tread portion has a thickness of 8.5 mm or less.

EP 4 296 080 A1

(52) Cooperative Patent Classification (CPC): (Cont.)

C-Sets
**C08F 236/06, C08F 212/08;**
**C08F 236/10, C08F 2/06;**
**C08F 236/10, C08F 4/48;**
**C08L 9/06, C08L 7/00, C08L 9/00, C08L 91/00, C08L 25/16, C08L 91/08, C08K 3/04, C08K 3/36, C08K 5/548, C08K 5/18, C08K 5/09, C08K 3/22, C08K 3/06, C08K 5/47, C08K 5/31;**
**C08L 15/00, C08L 7/00, C08L 9/00, C08L 25/16, C08L 91/00, C08L 91/08, C08K 3/04, C08K 3/36, C08K 5/548, C08K 5/18, C08K 5/09, C08K 3/22, C08K 3/06, C08K 5/47, C08K 5/31**

## Description

[TECHNICAL FIELD]

The present invention relates to a tire.

[BACKGROUND ART]

Tires are required to have excellent steering stability from the viewpoint of safety.

Therefore, various techniques have been proposed to improve steering stability by improving grip performance (for example, Patent Documents 1 to 4).

However, with the development of highways in recent years, it is not uncommon to travel long distances on highways, and with the above-described conventional technology, the steering stability during high-speed running is still not sufficient, and further improvement is strongly desired.

[Prior art documents]

[Patent document]

[Patent Document 1] JP2011-93386A
[Patent Document 2] JP2013-79017A
[Patent Document 3] JP2014-133845A
[Patent Document 4] JP2016-37100A

[SUMMARY OF INVENTION]

[PROBLEM TO BE SOLVED BY THE INVENTION]

An object of the present invention is to improve steering stability during high-speed running in view of the above-described problems.

[MEANS FOR SOLVING THE PROBLEM]

The present invention is

a tire having a tread portion, wherein
the cap rubber layer forming the tread portion is formed from a rubber composition containing

40 parts by mass or more and 60 parts by mass or less of styrene-butadiene rubber (SBR) with a styrene content of 25% by mass or less in 100 parts by mass of the rubber component, and
100 parts by mass or more of silica with respect to 100 parts by mass of the rubber component; and
the tread portion has a thickness of 8.5 mm or less.

[EFFECT OF THE INVENTION]

According to the present invention, it is possible to improve the steering stability at high-speed running.

[EMBODIMENTS FOR CARRYING OUT THE INVENTION]

[1] Features of the tire of the present invention

First, the features of the tire according to the present invention will be described.

1. Overview

The tire according to the present invention has members including fiber materials such as a carcass, which is

spanned between one and the other of a pair of bead portions that are parts to be fitted with the rim and serves as the frame of the tire, a belt layer, and a belt reinforcing layer, and a tread portion provided radially outward of these members. The tread portion has a cap rubber layer that is provided radially outward of the tire to serve as a contact surface, and if desired, further has a base rubber layer that is provided radially inward of the cap rubber layer.

The cap rubber layer is formed from a rubber composition containing, as a rubber component, 40 mass parts or more and 60 mass parts or less of SBR having a styrene content of 25 mass% or less in 100 mass parts of the rubber component, and 100 parts by mass or more of silica with respect to 100 mass parts of the rubber component. The thickness of the tread portion is 8.5 mm or less.

Note that the cap rubber layer is not limited to the rubber layer forming the outermost layer of the tread portion, but refers to a layer within 5 mm from the tread surface toward the inside. When there are two or more layers within 5 mm from the tread surface, at least one layer should satisfy the requirements of the rubber composition.

By having these features, as will be described later, it is possible to improve steering stability during high-speed running.

2. Mechanism of effect manifestation in tire according to the present invention

The mechanism of effect manifestation in the tire according to the present invention is considered as follows.

As described above, the cap rubber layer of the tire according to the present invention is formed from a rubber composition containing 40 parts by mass or more and 60 parts by mass or less of SBR having a styrene content of 25% by mass or less in 100 parts by mass of the rubber component, and 100 parts by mass or more of silica with respect to 100 parts by mass of the rubber component.

By containing 40 parts by mass or more and 60 parts by mass or less of SBR having a styrene content of 25% by mass or less in 100 parts by mass of the rubber component, minute styrene domains can be formed in the rubber matrix.

In the present invention, "containing 40 parts by mass or more and 60 parts by mass or less of SBR having a styrene content of 25% by mass or less in 100 parts by mass of the rubber component" means that the amount of SBR in 100 parts by mass of the rubber component is 40 parts by mass or more and 60 parts by mass or less, and that the styrene content in the entire SBR is 25% by mass or less.

That is, when a styrene-containing polymer (SBR) is contained alone in the rubber component, it indicates that the styrene content in the polymer is 25% by mass or less, and when multiple styrene-containing polymers (SBR) are contained in the rubber component, it shows that the styrene content obtained from the sum of the product of the styrene content (mass%) in each polymer and the compounding amount (mass parts) per 100 mass parts of the rubber component of the polymer is 25 mass% or less.

More specifically, when 100 parts by mass of the rubber component contains SBR1 (X1 parts by mass) with a styrene content of S1 mass% and SBR2 (X2 parts by mass) with a styrene content of S2 mass%, it is indicated that the styrene content calculated from the formula $\{(S1\times X1) + (S2\times X2)\} / (X1+X2)$ is 25% by mass or less.

In addition, in the vulcanized rubber composition, it is possible to calculate by determining the amount of styrene contained in the rubber component after acetone extraction by solid-state nuclear magnetic resonance (solid-state NMR) or Fourier transform infrared spectrophotometer (FTIR).

On the other hand, since silica, which is a filler, is generally unevenly distributed in the SBR layer, the amount of SBR in the rubber component should be about half, specifically 40 parts by mass or more and 60 parts by mass or less, to allow the formation of widely distributed SBR-silica domains within the matrix.

Due to the formation of these domains of different sizes, the ability to follow the road surface is not impaired even during high-speed running. In addition, when an input is applied from the road surface, heat generation is easily obtained due to the friction of the domain portion. As a result, it is considered possible to improve the grip performance of the tread surface.

In addition, by containing 100 parts by mass or more of silica per 100 parts by mass of the rubber component, and more than the rubber component, the rubber component is reinforced, and it is considered that the frictional force associated with the grip performance obtained by heat generation on the tread surface and inside is likely to be transmitted to the inside of the tire. Although the upper limit of the content of silica is not particularly limited, considering the kneading processability of the rubber composition, it is preferably 180 parts by mass or less.

Furthermore, in the tire according to the present invention, as described above, the thickness of the tread portion is reduced to 8.5 mm or less. As a result, it is possible to shorten the internal force transmission distance, and it is considered that the grip performance is improved. Note that, if the length is 7.0 mm or less, the above-described internal force transmission distance becomes shorter, so that the grip performance is further improved, which is preferable. In addition, it is preferable that the lower limit is 3.0 mm or more.

Here, the thickness of the tread portion refers to the thickness of the tread portion on the tire equatorial plane in the cross section in the tire radial direction. When the tread portion is formed of a single rubber composition, it refers the thickness of the rubber composition, and in the case of a laminated structure of multiple rubber compositions, it refers to the total thickness of these layers.

When the tire has a groove on the equatorial plane, it refers to the thickness from the intersection of a straight

line connecting the radially outermost end points of the groove with the tire equatorial plane to the radially innermost interface of the tread portion.

The tread portion is a member in the area forming the contact surface of the tire, and refers to a portion radially outside of members including fiber materials such as carcass, belt layer, and belt reinforcing layer. The thickness of the tread portion can be measured by aligning the bead portion with the standardized rim width in a cross section obtained by cutting the tire in the radial direction.

The "standardized rim" is a rim defined for each tire in the standard system including the standard on which the tire is based. For example, in the case of JATMA (Japan Automobile Tire Association), it is the standard rim in applicable sizes described in the "JATMA YEAR BOOK", in the case of "ETRTO (The European Tire and Rim Technical Organization)", it is "Measuring Rim" described in "STANDARDS MANUAL", and in the case of TRA (The Tire and Rim Association, Inc.), it is "Design Rim" described in "YEAR BOOK". JATMA, ETRTO, and TRA are referred to in that order, and if there is an applicable size at the time of reference, that standard is followed. In the case of tires that are not specified in the standard, it refers a rim that can be assembled and can maintain internal pressure, that is, the rim that does not cause air leakage from between the rim and the tire, and has the smallest rim diameter, and then the narrowest rim width.

It is considered that the tire according to the present invention sufficiently improves steering stability during high-speed running due to the cooperation of the above-described effects of improving grip performance and responsiveness.

[2] More preferable embodiment of the tire according to the present invention

The tire according to the present invention can obtain a larger effect by taking the following embodiment.

1. Multi-layered tread

In the present invention, the tread portion may be formed of only one layer of the cap rubber layer provided on the outer side in the tire radial direction, or may be formed of two layers by providing the base rubber layer on the inner side of the cap rubber layer in the tire radial direction. In addition, it may have three layers, four layers or more. In this case, the thickness of the cap rubber layer in the entire tread portion is preferably 10% or more, and more preferably 20% or more. As an upper limit, it is preferably less than 100%. As a result, even at high-speed running, sufficient friction is generated between the tread surface and the road surface, allowing sufficient frictional force to be transmitted inside the tire. Thus, grip performance is further improved and excellent steering stability can be exhibited. Considering the occurrence of friction between the tread surface and the road surface, the thickness of the cap rubber layer in the entire tread portion is preferably 70% or more, and more preferably 80% or more.

Here, the "thickness of the cap rubber layer" refers to the thickness of the cap rubber layer on the tire equatorial plane in the tire radial cross section. In case the tire has a groove on the equatorial plane, it refers to the thickness from the intersection of the straight line connecting the radially outermost endpoints of the groove and the tire equatorial plane to the interface with the innermost base rubber layer of the tread portion in the radial direction of the tire. The "thickness of the base rubber layer" refers to the thickness from the interface with the cap rubber layer to the innermost interface in the tire radial direction of the tread portion.

The thickness of the cap rubber layer and the thickness of the base rubber layer can be calculated by determining the thickness of the cap rubber layer and the thickness of the base rubber layer in the thickness of the tread portion. When a groove exists on the tire equatorial plane, it can be obtained by calculating the thickness of the cap rubber layer and the thickness of the base rubber layer at the center of the land portion of the tread portion closest to the equatorial plane.

In the present invention, the term "groove" refers to an opening having a width of 3 mm or more on the outermost surface of the tread portion and a depth of 3 mm or more.

2. Loss tangent tan δ

The loss tangent tan δ is a viscoelastic parameter indicating energy absorption performance, and the larger the value, the more energy can be absorbed and converted into heat.

Considering this point, in the tire according to the present invention, the loss tangent (30°C tan δ) of the rubber composition forming the cap rubber layer, measured under the conditions of 30°C, frequency of 10 Hz, initial strain of 5%, dynamic strain rate of 1%, deformation mode: tensile, is preferably 0.20 or more, more preferably 0.24 or more, further preferably 0.25 or more, further preferably 0.28 or more, further preferably 0.30 or more, further preferably 32 or more, and further preferably 33 or more.

As a result, energy can be sufficiently absorbed and converted into heat, making it easier for the entire tread rubber to generate energy loss due to conversion into heat, and it can be expected to improve grip performance and provide excellent steering stability. In the tire according to the present invention, the upper limit of 30°Ctan δ is not

particularly limited, but is preferably 0.50 or less, more preferably 0.45 or less, further preferably 0.40 or less, and further preferably 37 or less.

In the above, the loss tangent (tan δ) can be measured, for example, using a viscoelasticity measuring device such as "Eplexor (registered trademark)" series manufactured by GABO.

In the case of the multi-layered tread portion, described above, it is preferable that the 30°Ctan δ of the base rubber layer (30°Ctan δ B) is smaller than the 30°Ctan δ of the cap rubber layer (30°Ctan δ C), that is, 30°Ctan δ B / 30°Ctan δ C < 1. As a result, it is possible to reduce the phase difference between the grip performance generated by the cap rubber layer and the response inside the tire, and to improve the responsiveness, and it is considered that excellent steering stability at high-speed running can be obtained. Although specific (30°Ctan δ B / 30°Ctan δ C) is not particularly limited as long as it is less than 1, as the upper limit, for example, it is preferably 0.35 or less and as the lower limit, for example, it is preferably 0.15 or more.

The 30°Ctan δ of the cap rubber layer and the base rubber layer can be appropriately adjusted depending on the amount and type of compounding materials described later. For example, the 30°Ctan δ can be increased by increasing the content of styrene in the rubber component, increasing the content of SBR in the rubber component, increasing the content of styrene in the SBR component, increasing the content of fillers such as silica and carbon black, and increasing the content of the resin component. Conversely, it can be lowered by reducing the content of styrene in the rubber component, reducing the content of SBR in the rubber component, reducing the content of styrene in the SBR component, reducing the content of fillers such as silica and carbon black, and reducing the content of the resin component.

In the case of a multi-layered tread portion, the complex elastic modulus of the base rubber layer measured under the conditions of temperature of 30°C, frequency of 10 Hz, initial strain of 5%, dynamic strain rate of 1%, and deformation mode; tensile is preferably smaller than the complex elastic modulus of the cap rubber layer measured according to the same manner. These complex elastic moduli can be measured, for example, using a viscoelasticity measuring device such as "Eplexor (registered trademark)" manufactured by GABO.

The complex elastic modulus is a parameter that indicates the rigidity of the rubber layer. By making the complex elastic modulus of the base rubber layer smaller than the complex elastic modulus of the cap rubber layer, the entire tread portion deforms from the inside during running, and the road surface and the tread surface can contact the ground almost uniformly, so it is considered that the ground contact is improved and excellent steering stability can be obtained.

The ratio of the complex elastic modulus of the base rubber layer to the complex elastic modulus of the cap rubber layer (the complex elastic modulus of the base rubber layer/the complex elastic modulus of the cap rubber layer) is preferably 0.38 or less, more preferably 0.36 or less, and further preferably 0.35 or less. Although the lower limit is not particularly limited, it is preferably 0.05 or more, more preferably 0.10 or more, and further preferably 0.15 or more.

The complex elastic moduli at 30°C of the cap rubber layer and the base rubber layer can be appropriately adjusted depending on the amount and kind of compounding materials described later. For example, it can be increased by increasing the content of styrene in the rubber component, increasing the content of SBR in the rubber component, increasing the content of styrene in the SBR component, increasing the content of fillers such as silica and carbon black, reducing the content of plasticizer, and increasing the content of the resin component in the plasticizer. Conversely, it can be reduced

by reducing the content of styrene in the rubber component, reducing the content of SBR in the rubber component, reducing the content of styrene in the SBR component, reducing the content of fillers such as silica and carbon black, increasing the content of plasticizer, and reducing the content of the resin component in the plasticizer.

3. Relationship between 30°Ctan δ of cap rubber layer and thickness of tread portion

In the tire according to the present invention, 30°C tan δ / thickness (mm) of the entire tread portion is preferably 0.028 or more, more preferably more than 0.03, further preferably 0.033 or more, further preferably 0.038 or more, further preferably 0.039 or more, further preferably 0.040 or more, and further preferably 0.044 or more. Although the upper limit is not particularly limited, for example, it is 0.070 or less.

Due to this relationship, the 30°Ctan δ of the cap rubber layer is sufficiently high with respect to the thickness of the tread portion, sufficient grip performance can be obtained with the cap rubber layer with respect to the force transmission distance to the inside of the tire, and it is considered that reaction force can be easily obtained, so it is thought that even better steering stability can be obtained.

4. Relationship between the amount of styrene in the rubber component of the cap rubber layer and the thickness of the tread portion

In the present invention, the product of the amount (% by mass) of styrene contained in the rubber component of the cap rubber layer and the thickness of the tread portion (mm) (the amount (% by mass) of styrene in the rubber component × the thickness of the tread portion (mm)) is preferably 127.5 or less, more preferably 120 or less, further

preferably 105 or less, further preferably 100 or less, further preferably 85 or less, and further preferably 75 or less. On the other hand, the lower limit is not particularly limited, but is preferably 30 or more, more preferably 40 or more, further preferably 42.0 or more, further preferably 45 or more, and further preferably 51.0 or more.

It is considered that the styrene portion contained in the rubber component forms styrene domains within the rubber component and causes friction with the surrounding molecular chains. It is considered that, when excessive styrene domains are formed in the rubber component, heat generation and heat accumulation during rolling increase motility, making it difficult to maintain the styrene domain. Therefore, it is considered that by setting the product of the styrene content in the rubber component and the thickness of the tread portion to a certain value or less, heat dissipation from the tread portion can also be promoted, making it easier to maintain the styrene domains.

The styrene content in the rubber component mentioned above refers to the amount of styrene contained in 100 parts by mass of the rubber component. Styrene, which is a resin component and the like that is detached from the rubber component by a solvent such as acetone, is excluded. The styrene content in the rubber component can be calculated from the product of the styrene content of each styrene-containing polymer and the compounding amount. For example, when X1 parts by mass of SBR with a styrene content of A1 and X2 parts by mass of SBR with a styrene content of A2 are contained, the styrene content in 100 parts by mass of the rubber component is calculated by $(A1 \times X1 + A2 \times X2) / 100$.

5. Particle size of silica contained in the cap rubber layer

In the present invention, the particle size (average primary particle size) of silica contained in the cap rubber layer is preferably 17 nm or less in consideration of the above-described formation of the SBR-silica domains and friction in the domain portion.

The average primary particle size can be obtained by directly observing silica extracted from the rubber composition cut out from the tire using an electron microscope (TEM) or the like, calculating the equal cross-sectional area diameter from the area of each silica particle thus obtained, and calculating the average value.

6. Containing a resin component in the cap rubber layer

In the present invention, the rubber composition forming the cap rubber layer preferably contains a resin component.

By containing the resin component in the rubber composition, it is considered that even during high-speed running, the grip performance on the road surface is ensured due to the adhesiveness of the resin component, and steering stability can be improved.

Examples of the preferred resin components include rosin-based resins, styrene-based resins, coumarone-based resins, terpene-based resins, C5 resins, C9 resins, C5C9 resins, and acrylic resins, which will be described later. Among these, a styrene-based resin such as $\alpha$-methylstyrene is more preferred. The content with respect to 100 parts by mass of the rubber component is preferably 20 parts by mass or more, more preferably 25 parts by mass or more, and further preferably 35 parts by mass or more.

7. Acetone extractable content of cap rubber layer (AE)

In the present invention, the acetone-extractable content (AE) of the cap rubber layer is preferably 19% by mass or more, from the viewpoint of exhibiting excellent steering stability due to stable grip performance during high-speed running. It is more preferably 20 % by mass or more, further preferably 23% by mass or more, further preferably 23.2 by mass or more, and further preferably 23.4% by mass or more. On the other hand, although the upper limit is not particularly limited, it is preferably 30% by mass or less, more preferably 27.7 % by mass or less, further preferably 27. 5 % by mass or less, further preferably 27% by mass or less, further preferably 26.4 % by mass or less, further preferably 26.0 % by mass or less, further preferably 25.5% by mass or less, further preferably 25% by mass or less, and further preferably 24.5 % by mass or less.

The acetone extractable content (AE) can be considered as an index indicating the amount of softening agents and the like in the rubber composition, and can also be considered as an index indicating the softness of the rubber composition. For this reason, as mentioned above, if the amount of AE is increased to some extent in the cap rubber layer, it is considered that a sufficient area of contact between the tire and the road surface can be ensured, and grip performance can be stably demonstrated at high-speed running.

Note that the acetone extractable content (AE) can be measured in accordance with JIS K 6229:2015. Specifically, AE (% by mass) can be obtained by immersing a vulcanized rubber test piece cut out from the measurement site in acetone for a predetermined time and determining the mass reduction rate (%) of the test piece.

More specifically, each vulcanized rubber test piece is immersed in acetone at room temperature and normal

pressure for 72 hours to extract soluble components; the mass of each test piece before and after extraction is measured; and the acetone extraction amount can be calculated by the following formula.

$$\text{Acetone extraction amount (\%)} = \{(\text{mass of rubber test piece before extraction} - \text{mass of rubber test piece after extraction}) / (\text{mass of rubber test piece before extraction})\} \times 100$$

Moreover, the above-mentioned acetone extraction amount can be appropriately changed by changing the compounding ratio of the plasticizer in the rubber composition.

8. Land ratio

In the tire according to the present invention, the land ratio in the tread portion of the tire installed on a standardized rim and having a standardized internal pressure is preferably 55% or more, more preferably 60% or more, and further preferably 63% or more.

"Land ratio" is the ratio of the actual contact area to the virtual contact area in which all the grooves on the surface of the tread are filled. It is considered that, when the land ratio is large, since the contact area with the road surface becomes large, sufficient grip performance can be stably obtained, and excellent steering stability can be exhibited.

As the upper limit of the land ratio, it is preferably 90% or less, more preferably 85% or less, further preferably 80% or less, further preferably 75% or less, and further preferably 70% or less.

The above land ratio can be obtained from the ground contact shape under the conditions of standardized rim, standardized internal pressure, and standardized load.

Specifically, the tire is installed on a standardized rim, a standardized internal pressure is applied, and the tire is allowed to stand at 25°C for 24 hours. Thereafter, an ink is printed on the tire tread surface, a standardized load is applied and then the tire tread surface is pressed against a thick paper (camber angle is 0°) to transfer the ink to the paper. Thus, the contact shape can be obtained. The transfer is made at five locations by rotating the tire by 72° in the circumferential direction. That is, the ground contact shape is obtained five times. At this time, for the five ground contact shapes, the discontinuous portions with the grooves of the contour are smoothly connected, and the resulting shape is defined as a virtual contact surface.

Then, the land ratio can be obtained from (average area of the five ground contact shapes (black portions) transferred to the thick paper / average of the areas of virtual contact surfaces obtained from the five ground contact shapes) × 100 (%).

Note that, the "standardized internal pressure" is the air pressure specified for each tire by the above-mentioned standards, and is the maximum air pressure for JATMA, "INFLATION PRESSURE" for ETRTO, and the maximum value described in the table "TIRE LOAD LIMITS AT VARIOUS COLD INFLATION PRESSURES" for TRA. As in the case of "standardized rim", refer to JATMA, ETRTO, and TRA in that order, and their standards are followed. And, in the case of a tire that is not defined in the standard, it is the standardized internal pressure (however, 250 kPa or more) of another tire size (specified in the standard) for which the standardized rim is described as the standard rim. When a plurality of standardized internal pressures of 250 kPa or more are listed, the minimum value among them is referred.

In addition, the "standardized load" is the load defined for each tire by the standards in the standard system including the standard on which the tire is base and refers to the maximum mass that can be loaded on the tire, and is the maximum load capacity for JATMA, "LOAD CAPACITY" for ETRTO, and the maximum value described in "TIRE LOAD LIMITS AT VA RIOUS COLD INFLATION PRESSURES" for TRA. As in the case of "standardized internal pressure", JATMA, ETRTO, and TRA are referred to in that order, and their standards are followed. Then, in the case of a tire not specified in the standard, the standardized load WL is obtained by the following calculation.

$$V=\{(Dt/2)^2 - (Dt/2 - Ht)^2\} \times \pi \times Wt$$

$$W_L=0.000011 \times V + 175$$

$W_L$: standardized load (kg)
V: virtual volume of tire ($mm^3$)
Dt: tire outer diameter Dt (mm)
Ht: tire section height (mm)
Wt: cross-sectional width of tire (mm)

9. Aspect ratio

As will be described later, the aspect ratio is the cross-sectional height to the tire cross-sectional width, and the smaller this ratio, the smaller the ratio of the portion that deforms in the tire width direction against the friction obtained in the tread portion, and it is considered that it becomes easier to transmit the more force. For this reason, stability and responsiveness are enhanced during high-speed running, steering becomes more responsive, and it is considered to increase steering stability during high-speed running. On the other hand, when the aspect ratio is low, the amount of deflection at the side portions becomes small, which may lead to deterioration in ride comfort performance.
Considering these points, the specific aspect ratio of the tire according to the present invention is preferably 30% or more and 60% or less.
Note that the above aspect ratio (%) can be obtained by the following formula based on the cross-sectional height Ht (mm), the cross-sectional width Wt (mm), the tire outer diameter Dt (mm), and the rim diameter R (mm) when the internal pressure is 250 kPa.

$$\text{Aspect ratio } (\%) = (Ht/Wt) \times 100\ (\%)$$

$$Ht = (Dt - R) / 2$$

[3] Embodiment

The present invention will be specifically described below based on embodiments.

1. Rubber composition

In the tire according to the present invention, the rubber composition forming the cap rubber layer can be obtained by appropriately adjusting the types and amounts of various compounding materials such as the rubber component, filler, softening agent, vulcanizing agent, and vulcanization accelerator described below.

(1) Compounding material

(a) Rubber component

The rubber component is not particularly limited, and rubbers (polymers) commonly used in the manufacture of tires can be used. Examples of the rubbers include diene rubbers such as isoprene based rubber, butadiene rubber (BR), styrene butadiene rubber (SBR), and nitrile rubber (NBR); butyl based rubber such as butyl rubber; and thermoplastic elastomers such as styrene butadiene styrene block copolymer(SBS) and styrene-butadiene block copolymer (SB).
In the present embodiment, among these, from the point of containing styrene in the rubber component, any one of styrene-based polymers such as SBR, SBS and SB is preferably contained, and more preferably SBR is contained. These styrene-based polymers may be used in combination with other rubber components, and for example, combination of SBR and BR, and combination of SBR, BR and isoprene rubber are preferred.

(a-1) SBR

The weight average molecular weight of SBR is, for example, more than 100,000 and less than 2,000,000. Further, in the present invention, as described above, the amount of styrene in the SBR component is set to 25% by mass or less. It is more preferably 20% by mass or less, and further preferably 15% by mass or less. On the other hand, as the lower limit, it is preferably 3% by mass or more, more preferably 5% by mass or more, and further preferably 8% by mass or more.
The vinyl content (1,2-bonded butadiene content) of SBR is, for example, more than 5% by mass and less than 70% by mass. The vinyl content of SBR refers to the content of 1,2-bonded butadiene with respect to the entire butadiene portion in the SBR component. Further, structural identification of SBR (measurement of styrene content and vinyl content) can be performed using, for example, JNM-ECA series equipment manufactured by JEOL Ltd.
The content of SBR in 100 parts by mass of the rubber component is 40 parts by mass or more and 60 parts by mass or less, and preferably 45 parts by mass or more and 55 parts by mass or less.
The SBR is not particularly limited, and for example, emulsion-polymerized styrene-butadiene rubber (E-SBR), solution-polymerized styrene-butadiene rubber (S-SBR) and the like can be used. The SBR may be either a non-modified SBR or a modified SBR. In addition, hydrogenated SBR obtained by hydrogenating the butadiene portion of SBR may be used. Hydrogenated SBR may be obtained by subsequently hydrogenating the BR portion of SBR. Styrene, ethylene and butadiene may be copolymerized to give similar structures.
The modified SBR may be any SBR having a functional group that interacts with a filler such as silica. Examples thereof include

end-modified SBR (end-modified SBR having the above functional group at the terminal) in which at least one end of the SBR is modified with a compound having the above functional group (modifying agent),
main chain modified SBR having the functional group in the main chain,
main chain terminal modified SBR having the functional group at the main chain and the terminal (for example, a main chain end modified SBR having the above functional group to the main chain and having at least one end modified with the above modifying agent), and
end-modified SBR which is modified (coupled) with a polyfunctional compound having two or more epoxy groups in the molecule, and into which an epoxy group or hydroxyl group has been introduced.

Examples of the functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, and an epoxy group. In addition, these functional groups may have a substituent.
Further, as the modified SBR, for example, an SBR modified with a compound (modifying agent) represented by the following formula can be used.

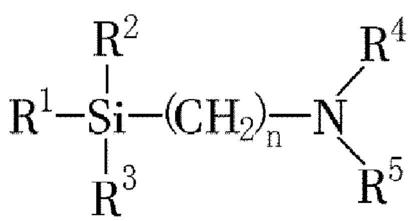

In the formula, $R^1$, $R^2$ and $R^3$ are the same or different and represent alkyl group, alkoxy group, silyloxy group, acetal group, carboxyl group (-COOH), mercapto group (-SH) or derivatives thereof. $R^4$ and $R^5$ are the same or different and represent hydrogen atoms or alkyl group. $R^4$ and $R^5$ may be combined to form a ring structure with nitrogen atoms. n represents an integer.
As the modified SBR modified by the compound (modifying agent) represented by the above formula, SBR, in which the polymerization end (active end) of the solution-polymerized styrene-butadiene rubber (S-SBR) is modified by the compound represented by the above formula (for example, modified SBR described in JP-A-2010-111753), can be used.
As $R^1$, $R^2$ and $R^3$, an alkoxy group is suitable (preferably an alkoxy group having 1 to 8 carbon atoms, more preferably an alkoxy group having 1 to 4 carbon atoms). As $R^4$ and $R^5$, an alkyl group (preferably an alkyl group having

1 to 3 carbon atoms) is suitable. n is preferably 1 to 5, more preferably 2 to 4, and even more preferably 3. Further, when $R^4$ and $R^5$ are combined to form a ring structure together with a nitrogen atom, a 4- to 8-membered ring is preferable. The alkoxy group also includes a cycloalkoxy group (cyclohexyloxy group, and the like) and an aryloxy group (phenoxy group, benzyloxy group, and the like).

Specific examples of the above modifying agent include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane. These may be used alone or in combination of two or more.

Further, as the modified SBR, a modified SBR modified with the following compound (modifying agent) can also be used. Examples of the modifying agent include

polyglycidyl ethers of polyhydric alcohols such as ethylene glycol diglycidyl ether, glycerin triglycidyl ether, trimethylolethanetriglycidyl ether, and trimethylolpropane triglycidyl ether;
polyglycidyl ethers of aromatic compounds having two or more phenol groups such as diglycidylated bisphenol A;
polyepoxy compounds such as 1,4-diglycidylbenzene, 1,3,5-triglycidylbenzene, and polyepoxidized liquid polybutadiene;
epoxy group-containing tertiary amines such as 4,4' -diglycidyl-diphenylmethylamine, and 4,4'-diglycidyl-dibenzylmethylamine;
diglycidylamino compounds such as diglycidylaniline, N, N'-diglycidyl-4-glycidyloxyaniline, diglycidyl orthotoluidine, tetraglycidylmetaxylenidiamine, tetraglycidylaminodiphenylmethane,
tetraglycidyl-p -phenylenediamine, diglycidylaminomethylcyclohexane, and
tetraglycidyl-1,3-bisaminomethylcyclohexane;
amino group-containing acid chlorides such as bis- (1-methylpropyl) carbamate chloride, 4-morpholincarbonyl chloride, 1-pyrrolidincarbonyl chloride, N, N-dimethylcarbamide acid chloride, and N, N-diethylcarbamide acid chloride;
epoxy group-containing silane compounds such as 1,3-bis-(glycidyloxypropyl) -tetramethyldisiloxane, and (3-glycidyloxypropyl) - pentamethyldisiloxane;
sulfide group-containing silane compound such as (trimethylsilyl) [3-(trimethoxysilyl) propyl] sulfide, (trimethylsilyl) [3- (triethoxysilyl) propyl] sulfide, (trimethylsilyl) [3- (tripropoxysilyl) propyl] sulfide, (trimethylsilyl)
[3- (tributoxysilyl) propyl] sulfide, (trimethylsilyl) [3-(methyldimethoxysilyl) propyl] sulfide, (trimethylsilyl) [3-(methyldiethoxysilyl) propyl] sulfide, (trimethylsilyl) [3-(methyldipropoxysilyl) propyl] sulfide, and (trimethylsilyl) [3-(methyldibutoxysilyl) propyl] sulfide;

N-substituted aziridine compound such as ethyleneimine and propyleneimine;

alkoxysilanes such as methyltriethoxysilane, N, N-bis (trimethylsilyl) -3-aminopropyltrimethoxysilane, N, N-bis (trimethylsilyl) - 3-aminopropyltriethoxysilane, N, N-bis (trimethylsilyl) aminoethyltrimethoxysilane, and N, N-bis (trimethylsilyl) aminoethyltriethoxysilane;
(thio) benzophenone compound having an amino group and/or a substituted amino group such as 4-N, N-dimethylaminobenzophenone, 4-N, N-di-t-butylaminobenzophenone, 4-N, N-diphenylamino benzophenone, 4,4'-bis (dimethylamino) benzophenone, 4,4'-bis (diethylamino) benzophenone, 4,4'-bis (diphenylamino) benzophenone, and N, N, N', N'-bis-(tetraethylamino) benzophenone;
benzaldehyde compounds having an amino group and/or a substituted amino group such as 4-N, N-dimethylaminobenzaldehyde, 4-N, N-diphenylaminobenzaldehyde, and 4-N, N-divinylamino benzaldehyde;

N-substituted pyroridone such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone;

N- substituted piperidone such as methyl-2-piperidone, N-vinyl-2-piperidone, and N-phenyl-2-piperidone;
N-substituted lactams such as
N-methyl -ε-caprolactam, N-phenyl-ε-caprolactum, N-methyl-ω-laurilolactum, N-vinyl-ω-laurilolactum, N-methyl-β-propiolactam, and N-phenyl-6-propiolactam; and
N, N-bis- (2,3-epoxypropoxy)-aniline, 4,4-methylene-bis- (N, N-glycidylaniline), tris- (2,3-epoxypropyl)-1,3,5-triazine-2,4,6-triones, N, N-diethylacetamide, N-methylmaleimide, N, N-diethylurea, 1,3-dimethylethylene urea, 1,3-divinylethyleneurea, 1,3-diethyl-2-imidazolidinone, 1-methyl-3-ethyl-2-imidazolidinone, 4-N, N-dimethylaminoacetophenone, 4-N, N-diethylaminoacetophenone, 1,3-bis (diphenylamino)-2-propanone, and 1,7 -bis(methylethylamino)-4-heptanone. The modification with the above compound (modifying agent) can be carried out by a known method.

As the SBR, for example, SBR manufactured and sold by Sumitomo Chemical Co., Ltd., ENEOS Material Co., Ltd., Asahi Kasei Co., Ltd., Zeon Co., Ltd., etc. can be used. The SBR may be used alone or in combination of two or more.

(a-2) BR

In the present invention, BR may be further contained as necessary. In this case, the content of BR in 100 parts by mass of the rubber component is preferably more than 10 parts by mass, and more preferably more than 15 parts by mass. On the other hand, it is preferably less than 30 parts by mass, and more preferably less than 25 parts by mass.

The weight average molecular weight of BR is, for example, more than 100,000 and less than 2,000,000. The vinyl bond amount of BR is, for example, more than 1% by mass and less than 30% by mass. The cis content of BR is, for example, more than 1% by mass and less than 98% by mass. The trans content of BR is, for example, more than 1% by mass and less than 60% by mass.

The BR is not particularly limited, and BR having a high cis content (cis content of 90% or more), BR having a low cis content, BR containing syndiotactic polybutadiene crystals, and the like can be used. The BR may be either a non-modified BR or a modified BR, and examples of the modified BR include a modified BR into which the above-mentioned functional group has been introduced. These may be used alone or in combination of two or more. The cis content can be measured by infrared absorption spectrum analysis.

As the BR, for example, products of Ube Industries, Ltd., ENEOS Material Co., Ltd., Asahi Kasei Co., Ltd., and Nippon Zeon Co., Ltd., etc. can be used.

(a-3) Isoprene rubber

In the present invention, an isoprene-based rubber may be further contained as necessary. In this case, the content of the isoprene-based rubber in 100 parts by mass of the rubber component is preferably more than 10 parts by mass, and more preferably 20 parts by mass or more. On the other hand, as the upper limit, it is preferably less than 60 parts by mass, and more preferably less than 35 parts by mass.

Examples of the isoprene-based rubber include natural rubber (NR), isoprene rubber (IR), reformed NR, modified NR, and modified IR.

As the NR, for example, SIR20, RSS # 3, TSR20 and the like, which are commonly used in the tire industry, can be used. The IR is not particula rly limited, and for example, IR 2200 or the like, which is commonly used in the tire industry, can be used. Reformed NR includes deproteinized natural rubber (DPNR), high-purity natural rubber (UPNR), etc., and modified NR includes epoxidized natural rubber (ENR), hydrogenated natural rubber (H NR), grafted natural rubber, etc. Examples of the modified IR include epoxi dized isoprene rubber, hydrogenated isoprene rubber, and grafted isoprene r ubber. These may be used alone or in combination of two or more.

(a-4) Other rubber components

Further, as other rubber components, rubbers (polymers) generally used for manufacturing tires, such as nitrile rubber (NBR), may be contained.

(b) Compounding materials other than rubber components (b-1) Filler

In the present embodiment, the rubber composition preferably contains a filler. Examples of specific fillers include silica, carbon black, graphite, calcium carbonate, talc, alumina, clay, aluminum hydroxide, and mica.

(i-1) Silica

In the present invention, the rubber composition preferably contains silica, and preferably contains a silane coupling agent together with silica.

The BET specific surface area of silica is preferably more than 140 $m^2/g$, and more preferably more than 160 $m^2/g$, from the viewpoint of obtaining good durability performance. On the other hand, it is preferably less than 250 $m^2/g$, and more preferably less than 220 $m^2/g$, from the viewpoint of obtaining good rolling resistance during high-speed running. The BET specific surface area mentioned above is the value of $N_2SA$ measured by the BET method according to ASTM D3037-93.

In the present invention, as described above, it is preferable to use silica having a particle size of 17 nm or less in the rubber composition. By using silica with a small particle size, it is possible to increase the frequency of contact with the polymer and improve grip performance. Although the lower limit is not particularly limited, it is preferably 10 nm or more from the viewpoint of dispersibility during mixing.

When silica is used as the filling reinforcing agent, it is contained in an amount of 100 parts by mass or more with respect to 100 parts by mass of the rubber component. As described above, considering the kneading processability of the rubber composition, the amount is preferably 180 parts by mass or less, and more preferably 150 parts by mass or less.
Examples of silica include dry silica (anhydrous silica) and wet silica (hydrous silica). Among them, wet silica is preferable because it has a large number of silanol groups. Silica made from water-containing glass or the like, or silica made from biomass materials such as rice husks may also be used.
As the silica, products of Evonik Industries, Rhodia Co., Ltd., Tosoh Silica Co., Ltd., Solvay Japan Co., Ltd., and Tokuyama Co., Ltd., etc. can be used.

(i-2) Silane coupling agent

When silica is used as the filler reinforcing agent, the rubber compos ition preferably contains a silane coupling agent together with silica. The sil ane coupling agent is not particularly limited, and examples thereof include

sulfide-based ones such as bis(3-triethoxysilylpropyl)tetrasulfide, bis (2-triethoxysilylethyl)tetrasulfide, bis (4-triethoxysilylbutyl)tetrasulfide, bis(3-trimethoxysilylpropyl) tetrasulfide, bis(2-trimethoxysilylethyl) tetrasulfide, bis(2 -triethoxysilylethyl)trisulfide, bis(4-trimethoxysilylbutyl) trisulfide, bis(3-triethoxysilylpropyl)disulfide, bis(2-triethoxysilylethyl) disulfide, bis(4-triethoxysilylbutyl)disulfide, bis(3-trimethoxysilylpropyl) disulfide, bis(2-trimethoxysilylethyl)disulfide, bis(4-trimethoxysilylbutyl)disulfide, 3-trimethoxysilylpropyl-N, N-dimethylthiocarbamoyltetrasulfide, 2-triethoxysilylethyl-N, N-dimethylthiocarbamoyltetrasulfide, and 3-triethoxysilylpropylmethacrylatemonosulfide;
mercapto-based ones such as 3-mercaptopropyltrimethoxysilane, 2-mercaptoethyltriethoxysilane, and NXT and NXT-Z manufactured by Momentive;
vinyl-based ones such as vinyl triethoxysilane, and vinyl trimethoxysilane;
amino-based ones such as 3-aminopropyltriethoxysilane and 3-aminopropyltrimethoxysilane;
glycidoxy-based ones such as γ-glycidoxypropyltriethoxysilane and γ-glycidoxypropyltrimethoxysilane;
nitro-based ones such as 3-nitropropyltrimethoxysilane, and 3-nitropropyltriethoxysilane; and
chloro-based ones such as 3-chloropropyltrimethoxysilane, and 3-chloropropyltriethoxysilane. These may be used alone or in combination of two or more.

As the silane coupling agent, for example, products of Evonik Industries, Momentive Co., Ltd., Shin-Etsu Silicone Co., Ltd., Tokyo Chemical Industry Co., Ltd., Azumax Co., Ltd., Toray Dow Corning Co., Ltd., etc. can be used.
The content of the silane coupling agent is, for example, more than 3 parts by mass and less than 25 parts by mass with respect to 100 parts by mass of silica.

(ii) Carbon black

In the present invention, the rubber composition preferably contains carbon black from the viewpoint of improving rigidity during high-speed running and improving responsiveness.
A specific content ratio of carbon black to 100 parts by mass of the rubber component is preferably 2 parts by mass or more, and more preferably 4 parts by mass or more. On the other hand, it is preferably 10 parts by mass or less, and more preferably 6 parts by mass or less.
Carbon black is not particularly limited, and examples thereof include furnace black (furnace carbon black) such as SAF, ISAF, HAF, MAF, FEF, SRF, GPF, APF, FF, CF, SCF and ECF; acetylene black (acetylene carbon black); thermal blacks (thermal carbon blacks) such as FT and MT; channel blacks (channel carbon blacks) such as EPC, MPC and CC. They may be used individually by 1 type, and may use 2 or more types together.
The CTAB (Cetyl Tri-methyl Ammonium Bromide) specific surface a rea of carbon black is preferably 130 $m^2$/g or more, more preferably 160 $m^2$/g or more, and further preferably 170 $m^2$/g or more. On the other hand, it is preferably 250 $m^2$/g or less, and more preferably 200 $m^2$/g or less. The CTA B specific surface area is a value measured according to ASTM D3765-92.
Specific carbon black is not particularly limited, and examples thereof include N134, N110, N220, N234, N219, N339, N330, N326, N351, N550, and N762. Commercially available products include, for example, products of Asahi Carbon Co., Ltd., Cabot Japan Co., Ltd., Tokai Carbon Co., Ltd., Mitsubishi Chemical Corporation, Lion Corporation, Shin Nikka Carbon Co., Ltd., Columbia Carbon Co., Ltd., etc. These may be used alone or in combination of two or more.

(iii) Other fillers

The rubber composition may further contain fillers such as graphite, calcium carbonate, talc, alumina, clay,

aluminum hydroxide, and mica, which are generally used in the tire industry, in addition to the above-mentioned silica and carbon black, as necessary. These contents are, for example, more than 0.1 part by mass and less than 200 parts by mass with respect to 100 parts by mass of the rubber component.

(b-2) Plasticizer component

The rubber composition may contain oil (including extender oil), liquid rubber, and resin as plasticizer components as components for softening rubber. The plasticizer component is a component that can be extracted from the vulcanized rubber with acetone. The total content of the plasticizer component is preferably 50 parts by mass or more, and more preferably 55 parts by mass or more, with respect to 100 parts by mass of the rubber component. On the other hand, it is preferably 80 parts by mass or less, and more preferably 75 parts by mass or less. The content of oil also includes the amount of oil contained in the rubber (oil-extended rubber).

(i) Oil

Examples of the oil include mineral oils (commonly referred to as process oils), vegetable oils, or mixtures thereof. As the mineral oil (process oil), for example, a paraffinic process oil, an aroma-based process oil, a naphthene process oil, or the like can be used. Examples of the vegetable oils and fats include castor oil, cottonseed oil, linseed oil, rapeseed oil, soybean oil, palm oil, coconut oil, peanut oil, rosin, pine oil, pine tar, tall oil, corn oil, rice oil, beni-flower oil, sesame oil, olive oil, sunflower oil, palm kernel oil, camellia oil, jojoba oil, macadamia nut oil, and tung oil. These may be used alone or in combination of two or more. Moreover, from the viewpoint of life cycle assessment, waste oil after being used as a lubricating oil for mixers for rubber mixing, automobile engines, etc., waste cooking oil, and the like may be used as appropriate.

Specific examples of process oil (mineral oil) include products of Idemitsu Kosan Co., Ltd., Sankyo Yuka Kogyo Co., Ltd., ENEOS Corporation, Olisoy Co., Ltd., H&R Co., Ltd., Toyokuni Seiyu Co., Ltd., Showa Shell Sekiyu Co., Ltd., and Fuji Kosan Co., Ltd.

(ii) Liquid rubber

The liquid rubber mentioned as the plasticizer is a polymer in a liquid state at room temperature (25°C) and is a polymer having a monomer similar to that of solid rubber as a constituent element. Examples of the liquid rubber include farnesene-based polymers, liquid diene-based polymers, and hydrogenated additives thereof.

The farnesene-based polymer is a polymer obtained by polymerizing farnesene, and has a structural unit based on farnesene. Farnesene includes isomers such as α-farnesene ((3E, 7E) -3,7,11-trimethyl-1,3,6,10-dodecatetraene) and β-farnesene (7,11-dimethyl-3-methylene-1, 6,10-dodecatorien).

The farnesene-based polymer may be a homopolymer of farnesene (farnesene homopolymer) or a copolymer of farnesene and a vinyl monomer (farnesene-vinyl monomer copolymer).

Examples of the liquid diene polymer include a liquid styrene-butadiene copolymer (liquid SBR), a liquid butadiene polymer (liquid BR), a liquid isoprene polymer (liquid IR), and a liquid styrene isoprene copolymer (liquid SIR).

The liquid diene polymer has a polystyrene-converted weight average molecular weight (Mw) measured by gel permeation chromatography (GPC) of, for example, more than $1.0 \times 10^3$ and less than $2.0 \times 10^5$. In the present specification, Mw of the liquid diene polymer is a polystyrene conversion value measured by gel permeation chromatography

(GPC).

The content of the liquid rubber (the total content of the liquid farnesene-based polymer, the liquid diene-based polymer, etc.) is, for example, more than 1 part by mass and less than 100 parts by mass with respect to 100 parts by mass of the rubber component.

As the liquid rubber, for example, products of Kuraray Co., Ltd. and Clay Valley Co., Ltd. can be used.

(iii) Resin component

The resin component also functions as a tackifying component and may be solid or liquid at room temperature. Specific examples of the resin components include rosin-based resin, styrene-based resin, coumarone-based resin, terpene-based resin, C5 resin, C9 resin, C5C9 resin, and acrylic resins. Two or more of them may be used in combination. Content of the resin component is more than 2 parts by mass, preferably less than 45 parts by mass, and more preferably less than 30 parts by mass with respect to 100 parts by mass of the rubber component. These resin components may

optionally be provided with modified groups capable of reacting with silica or the like.

The rosin-based resin is a resin whose main component is rosin acid obtained by processing rosin. The rosin-based resins (rosins) can be classified according to the presence or absence of modification, and can be classified into unmodified rosin (non-modified rosin) and modified rosin (rosin derivative). Unmodified rosins include tall rosin (also known as tall oil rosin), gum rosin, wood rosin, disproportionated rosin, polymerized rosin, hydrogenated rosin, and other chemically modified rosins. The modified rosin is a modified compound of a unmodified rosin, and examples thereof include rosin esters, unsaturated carboxylic acid-modified rosins, unsaturated carboxylic acid-modified rosin esters, rosin amide compounds, and rosin amine salts.

The styrene resin is a polymer using a styrene monomer as a constituent monomer, and examples thereof include a polymer obtained by polymerizing a styrene monomer as a main component (50% by mass or more). Specifically, it includes homopolymers obtained by individually polymerizing styrene monomers (styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, p-chlorostyrene, etc.), copolymers obtained by copolymerizing two or more styrene monomers, and, in addition, copolymers obtained by copolymerizing a styrene monomer and other monomers that can be copolymerized with the styrene monomer.

Examples of the other monomers include acrylonitriles such as acrylonitrile and methacrylonitrile; unsaturated carboxylic acids such as acrylic acid and methacrylic acid; unsaturated carboxylic acid esters such as methyl acrylate and methyl methacrylate; dienes such as chloroprene, butadiene, and isoprene, olefins such as 1-butene and 1-pentene; andα, β-unsaturated carboxylic acids and acid anhydrides thereof such as maleic anhydride.

Among the coumarone-based resin, coumarone-indene resin is preferably used. Coumarone-indene resin is a resin containing coumarone and indene as monomer components constituting the skeleton (main chain) of the resin. Examples of the monomer component contained in the skeleton other than coumarone and indene include styrene, α-methylstyrene, methylindene, and vinyltoluene.

The content of the coumarone-indene resin is, for example, more than 1.0 part by mass and less than 50.0 parts by mass with respect to 100 parts by mass of the rubber component.

The hydroxyl value (OH value) of the coumarone-indene resin is, for example, more than 15 mgKOH/g and less than 150 mgKOH/g. The OH value is the amount of potassium hydroxide required to neutralize acetic acid bonded to a hydroxyl group when 1 g of the resin is acetylated, and is expressed in milligrams. It is a value measured by potentiometric titration method (JIS K 0070: 1992).

The softening point of the coumarone-indene resin is, for example, higher than 30 °C and lower than 160 °C. The softening point is the temperature at which the ball drops when the softening point defined in JIS K 6220-1: 2001 is measured by a ring-ball type softening point measuring device.

Examples of the terpene-based resins include polyterpenes, terpene phenols, and aromatic-modified terpene resins. Polyterpene is a resin obtained by polymerizing a terpene compound and a hydrogenated product thereof. The terpene compound is a hydrocarbon having a composition of $(C_5H_8)_n$ or an oxygen-containing derivative thereof, which is a compound having a terpene classified as monoterpenes ($C_{10}H_{16}$), sesquiterpenes ($C_{15}H_{24}$), diterpenes ($C_{20}H_{32}$), etc. as the basic skeleton. Examples thereof include α-pinene, β-pinene, dipentene, limonene, myrcene, alloocimene, osimene, α-phellandrene, α-terpinene, γ-terpinene, terpinolene, 1,8-cineol, 1,4-cineol, α-terpineol, β-terpineol, and γ-terpineol.

Examples of the polyterpene include terpene resins such as α-pinene resin, β-pinene resin, limonene resin, dipentene resin, and β-pinene/limonene resin, which are made from the above-mentioned terpene compound, as well as hydrogenated terpene resin obtained by hydrogenating the terpene resin. Examples of the terpene phenol include a resin obtained by copolymerizing the above-mentioned terpene compound and the phenol compound, and a resin obtained by hydrogenating above-mentioned resin. Specifically, a resin obtained by condensing the above-mentioned terpene compound, the phenol compound and formalin can be mentioned. Examples of the phenol compound include phenol, bisphenol A, cresol, and xylenol. Examples of the aromatic-modified terpene resin include a resin obtained by modifying a terpene resin with an aromatic compound, and a resin obtained by hydrogenating the above-mentioned resin. The aromatic compound is not particularly limited as long as it is a compound having an aromatic ring, and examples thereof include phenol compounds such as phenol, alkylphenol, alkoxyphenol, and unsaturated hydrocarbon group-containing phenol; naphthol compounds such as naphthol, alkylnaphthol, alkoxynaphthol, and unsaturated hydrocarbon group-containing naphthols; styrene derivatives such as styrene, alkylstyrene, alkoxystyrene, unsaturated hydrocarbon group-containing styrene; coumarone; and indene.

The "C5 resin" refers to a resin obtained by polymerizing a C5 fraction. Examples of the C5 fraction include petroleum fractions having 4 to 5 carbon atoms such as cyclopentadiene, pentene, pentadiene, and isoprene. As the C5 based petroleum resin, a dicyclopentadiene resin (DCPD resin) is preferably used.

The "C9 resin" refers to a resin obtained by polymerizing a C9 fraction, which may be hydrogenated or modified. Examples of the C9 fraction include petroleum fractions having 8 to 10 carbon atoms such as vinyltoluene, alkylstyrene, indene, and methyl indene. As specific examples thereof, for example, a coumaron indene resin, a coumaron resin, an

indene resin, and an aromatic vinyl resin are preferably used. As the aromatic vinyl resin, a homopolymer of α -methylstyrene or styrene or a copolymer of α -methylstyrene and styrene is preferable because it is economical, easy to process, and excellent in heat generation. A copolymer of α -methylstyrene and styrene is more preferred. As the aromatic vinyl-based resin, for example, those commercially available from Kraton, Eastman Chemical, etc. can be used.

The "C5-C9 resin" refers to a resin obtained by copolymerizing the C5 fraction and the C9 fraction, which may be hydrogenated or modified. Examples of the C5 fraction and the C9 fraction include the above-mentioned petroleum fraction. As the C5-C9 resin, for example, those commercially available from Tosoh Corporation, LUHUA, etc. can be used.

The acrylic resin is not particularly limited, but for example, a solvent-free acrylic resin can be used.

As the solvent-free acrylic resin, a (meth) acrylic resin (polymer) synthesized by a high-temperature continuous polymerization method (high-temperature continuous lump polymerization method (a method described in US 4414370 B, JP 84-6207 A, JP 93-58805 B, JP 89-313522 A, US 5010166 B, Toa Synthetic Research Annual Report TREND2000 No. 3 p42-45, and the like) without using polymerization initiators, chain transfer agents, organic solvents, etc. as auxiliary raw materials as much as possible, can be mentioned. In the present invention, (meth) acrylic means methacrylic and acrylic.

Examples of the monomer component constituting the acrylic resin include (meth) acrylic acid, and (meth) acrylic acid derivatives such as (meth) acrylic acid ester (alkyl ester, aryl ester, aralkyl ester, etc.), (meth) acrylamide, and (meth) acrylamide derivative.

In addition, as the monomer component constituting the acrylic resin, aromatic vinyl compounds such as styrene, α-methylstyrene, vinyltoluene, vinylnaphthalene, divinylbenzene, trivinylbenzene, divinylnaphthalene, and the like may be used, together with (meth) acrylic acid or (meth) acrylic acid derivative.

The acrylic resin may be a resin composed of only a (meth) acrylic component or a resin also having a component other than the (meth) acrylic component. Further, the acrylic resin may have a hydroxyl group, a carboxyl group, a silanol group, or the like.

As the resin component, for example, a product of Maruzen Petrochemical Co., Ltd., Sumitomo Bakelite Co., Ltd., Yasuhara Chemical Co., Ltd., Toso Co., Ltd., Rutgers Chemicals Co., Ltd., BASF Co., Ltd., Arizona Chemical Co., Ltd., Nitto Chemical Co., Ltd., Co., Ltd., Nippon Catalyst Co., Ltd., ENEOS Co., Ltd., Arakawa Chemical Industry Co., Ltd., Taoka Chemical Industry Co., Ltd. can be used.

(b-3) Stearic acid

In the present invention, the rubber composition preferably contains stearic acid. Content of stearic acid is, for example, more than 0.5 parts by mass and less than 10.0 parts by mass with respect to 100 parts by mass of the rubber component. As the stearic acid, conventionally known ones can be used, and, for example, products of NOF Corporation, Kao Corporation, Fuji film Wako Pure Chemical Industries, Ltd., and Chiba Fatty Acid Co., Ltd., etc. can be used.

(b-4) Anti-aging agent

In the present invention, the rubber composition preferably contains an antioxidant. The content of the anti-aging agent is, for example, more than 0.5 parts by mass and less than 10 parts by mass, and more preferably 1 part by mass or more with respect to 100 parts by mass of the rubber component.

Examples of the antiaging agent include naphthylamine-based antiaging agents such as phenyl-α-naphthylamine; diphenylamine-based antiaging agents such as octylated diphenylamine and 4,4'-bis (α, α'-dimethylbenzyl) diphenylamine; p-phenylenediamine-based anti-aging agent such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline-based anti-aging agent such as a polymer of 2,2,4-trimethyl-1,2-dihydroquinolin; monophenolic anti-aging agents such as 2,6-di-t-butyl-4-methylphenol, styrenated phenol; bis, tris, polyphenolic anti-aging agents such as tetrakis-[methylene-3- (3',5'-di-t-butyl-4'-hydroxyphenyl)propionate] methane. These may be used alone or in combination of two or more.

As the anti-aging agent, for example, products of Seiko Chemical Co., Ltd., Sumitomo Chemical Co., Ltd., Ouchi Shinko Chemical Industry Co., Ltd., Flexsys Co., Ltd., etc. can be used.

(b-5) Wax

In the present invention, the rubber composition preferably contains wax. Content of the wax is, for example, 0.5 to 20 parts by mass, preferably 1.0 to 15 parts by mass, and more preferably 1.5 to 10 parts by mass with respect to 100 parts by mass of the rubber component.

The wax is not particularly limited, and examples thereof include petroleum waxes such as paraffin wax and microcrystalline wax; natural waxes such as plant waxes and animal waxes; synthetic waxes such as polymers of ethylene and propylene. These may be used alone or in combination of two or more.

As the wax, for example, products of Ouchi Shinko Chemical Industry Co., Ltd., Nippon Seiro Co., Ltd., Seiko Chemical Co., Ltd., etc. can be used.

(b-6) Zinc oxide

The rubber composition may contain zinc oxide. Content of the zinc oxide is, for example, more than 0.5 parts by mass and less than 10 parts by mass with respect to 100 parts by mass of the rubber component. As the zinc oxide, conventionally known ones can be used, for example, products of Mitsui Mining & Smelting Co., Ltd., Toho Zinc Co., Ltd., Hakusui Tech Co., Ltd., Shodo Chemical Industry Co., Ltd., Sakai Chemical Industry Co., Ltd., etc. can be used.

(b-7) Cross-linking agent and vulcanization accelerator

The rubber composition preferably contains a cross-linking agent such as sulfur. Content of the cross-linking agent is, for example, more than 0.1 parts by mass and less than 10.0 parts by mass with respect to 100 parts by mass of the rubber component.

Examples of sulfur include powdered sulfur, precipitated sulfur, colloidal sulfur, insoluble sulfur, highly dispersible sulfur, and soluble sulfur, which are commonly used in the rubber industry. These may be used alone or in combination of two or more.

As the sulfur, for example, products of Tsurumi Chemical Industry Co., Ltd., Karuizawa Sulfur Co., Ltd., Shikoku Chemicals Corporation, Flexsys Co., Ltd., Nippon Kanryu Kogyo Co., Ltd., Hosoi Chemical Industry Co., Ltd., etc. can be used.

Examples of the cross-linking agent other than sulfur include vulcanizing agents containing a sulfur atom such as Tackirol V200 manufactured by Taoka Chemical Industry Co., Ltd., and KA9188 (1,6-bis (N, N'-dibenzylthiocarbamoyldithio) hexane) manufactured by Lanxess; and organic peroxides such as dicumyl peroxide.

The rubber composition preferably contains a vulcanization accelerator. The content of the vulcanization accelerator is, for example, more than 0.3 parts by mass and less than 10.0 parts by mass with respect to 100 parts by mass of the rubber component.

Examples of the vulcanization accelerator include

thiazole-based vulcanization accelerators such as 2-mercaptobenzothiazole, di-2-benzothiazolyl disulfide, and N-cyclohexyl-2-benzothiadylsulfenamide;
thiuram-based vulcanization accelerators such as tetramethylthiuram disulfide (TMTD), tetrabenzyltiuram disulfide (TBzTD), and tetrakis (2-ethylhexyl) thiuram disulfide (TOT-N);
sulfenamide-based vulcanization accelerators such as N-cyclohexyl-2-benzothiazolesulfenamide, N-t-butyl- 2-benzothiazolyl sulfenamide, N-oxyethylene-2-benzothiazolesulfenamide, and N,N'-diisopropyl-2-benzothiazolesulfenamide; and
guanidine-based vulcanization accelerators such as diphenylguanidine, di-ortho-tolylguanidine and ortho-tolylbiguanidine. These may be used alone or in combination of two or more.

(b-8) Others

In addition to the above components, the rubber composition may contain additives commonly used in the tire industry, such as fatty acid metal salts, carboxylic acid metal salts, organic peroxides, anti-reversion agents may be further contained, if desired. Content of these additives is, for example, more than 0.1 parts by mass and less than 200 parts by mass with respect to 100 parts by mass of the rubber component.

(2) Production of rubber composition

The rubber composition forming the cap rubber layer is prepared by appropriately adjusting the various compounding materials described above and performing a general method, for example, a manufacturing method having a base kneading step of kneading a rubber component and a filler such as carbon black, and a finish kneading step of kneading the kneaded product obtained in the base kneading step and a cross-linking agent.

Kneading can be performed using, for example, a known (closed) kneader such as a Banbury mixer, kneader, and open roll.

The kneading temperature in the base kneading step is, for example, higher than 50°C and lower than 200°C, and the kneading time is, for example, more than 30 seconds and less than 30 minutes. In the base kneading step, in addition to the above components, compounding agents conventionally used in the rubber industry, such as softeners such as oils, zinc oxide, anti-aging agents, waxes, and vulcanization accelerators, may be appropriately added and

kneaded as desired.

In the finish kneading step, the kneaded material obtained in the base kneading step and a cross-linking agent are kneaded. The kneading temperature in the finish kneading step is, for example, higher than room temperature and lower than 80°C, and the kneading time is, for example, more than 1 minute and less than 15 minutes. In the finish kneading step, in addition to the above components, a vulcanization accelerator, zinc oxide, and the like may be appropriately added and kneaded as desired.

2. Manufacture of tires

The tire according to the present invention can be produced as an unvulcanized tire by forming a tread rubber having a predetermined shape using the rubber composition obtained above as a cap rubber layer, and then forming the tire together with other tire members by an ordinary method on a tire molding machine.

When the tread portion is to have a multi-layered structure with the base rubber layer, a rubber composition forming a base rubber layer can be obtained, basically, by using the above-described rubber component and compounding materials, appropriately changing the compounding amount, and kneading in the same manner. Then, it is stacked with a cap rubber layer and molded into a tread rubber of a predetermined shape, and then molded together with other tire members on a tire molding machine by a normal method to produce an unvulcanized tire.

Specifically, on the molding drum, the inner liner as a member to ensure the airtightness of the tire, the carcass as a member to withstand the load, impact, and filling air pressure received by the tire, a belt member as a member to strongly tighten the carcass to increase the rigidity of the tread, and the like are wound, both ends of the carcass are fixed to both side edges, a bead portion as a member for fixing the tire to the rim is arranged, and formed into a toroid shape. Then the tread is pasted on the center of the outer circumference, and the sidewall is pasted on the radial outer side to form the side portion. Thus, an unvulcanized tire is produced.

Then, the produced unvulcanized tire is heated and pressed in a vulcanizer to obtain a tire. The vulcanization step can be carried out by applying a known vulcanization means. The vulcanization temperature is, for example, higher than 120 °C and lower than 200 °C, and the vulcanization time is, for example, more than 5 minutes or and less than 15 minutes

The above tires are preferably used as tires for passenger cars, tires for large passenger cars, tires for large SUVs, tires for trucks and buses, tires for motorcycles, racing tires, studless tires (winter tires), all-season tires, run-flat tires, tires for aircraft, tires for mining, non-pneumatic tires, etc. Particularly, it is preferable to use it as a tire for passenger car. Moreover, it is preferable to set it as a pneumatic tire.

[Example]

Examples considered to be preferable when implementing the present invention are shown below, but the scope of the present invention is not limited to these examples. In the examples, a pneumatic tire (tire size: 205/55R16, aspect ratio: 55%, land ratio: 65%) made from a composition obtained by using various chemicals mentioned below and changing the formulation according to each Table were evaluated. The results calculated based on the following evaluation methods are shown in Tables 2 to 5.

1. Rubber composition forming cap rubber layer

(1) Compounding material

(a) Rubber component

(a-1) NR: TSR20

(a-2) SBR-1: Modified S-SBR obtained by the method shown in the next paragraph (styrene content: 25% by mass, vinyl content: 27% by mass)

(a-3) SBR-2: SLR6430 (S-SBR) manufactured by Trinseo Co. Ltd. (styrene content: 40% by mass, vinyl content: 24% by mass, 37.5% oil extended product)

(a-4) SBR-3: HPR840 (S-SBR) manufactured by ENEOS Material Co., Ltd. (styrene content: 10% by mass, vinyl content: 42% by mass)

(a-5) BR: Ubepol BR150B (Hi-cis BR) from Ube Industries, Ltd. (cis content 97% by mass, trans content 2% by mass, vinyl content 1% by mass)

(Manufacture of SBR-1)

The above SBR-1 is produced according to the following procedure. First, two autoclaves having an internal volume of 10 L, having an inlet at the bottom and an outlet at the top, equipped with a stirrer and a jacket, were connected in series as reactors. Butadiene, styrene, and cyclohexane were each mixed in a predetermined ratio. This mixed solution is passed through a dehydration column filled with activated alumina, mixed with n-butyllithium in a static mixer to remove impurities. Then, it is continuously supplied from the bottom of the first reactor, further 2,2-bis(2-oxolanyl)propane as a polar substance and n-butyllithium as a polymerization initiator are continuously supplied at a predetermined rate from the bottom of the first reactor, and the internal temperature of the reactor is kept at 95°C. The polymer solution is continuously withdrawn from the top of the first reactor and supplied to the second reactor. The temperature of the second reactor is kept at 95°C, and a mixture of tetraglycidyl-1,3-bisaminomethylcyclohexane (monomer) as a modifier and an oligomer component is continuously added, as a 1000-fold dilution of cyclohexane, at a predetermined rate to carry out the denaturation reaction. This polymer solution is continuously withdrawn from the reactor, an antioxidant is added continuously by a static mixer, and the solvent is removed to obtain the desired modified diene polymer (SBR-1).

The vinyl content (unit: mass%) of the SBR-1 is determined by infrared spectroscopy from the absorption intensity near 910 $cm^{-1}$, which is the absorption peak of the vinyl group. Also, the styrene content (unit: % by mass) is determined from the refractive index according to JIS K6383(1995).

(b) Compounding materials other than rubber components

(b-1) Carbon black: Show Black N134 manufactured by Cabot Japan Co., Ltd. (CTAB specific surface area: 135 $m^2/g$)
(b-2) Silica-1: Ultrasil VN3 manufactured by Evonik Industries ($N_2SA$: 175 $m^2/g$, average particle size: 18 nm)
(b-3) Silica-2: Ultrasil 9100Gr manufactured by Evonik Industries ($N_2SA$: 235 $m^2/g$, average particle size: 15 nm(fine particle silica))
(b-4) Oil: Diana Process AH-24 (aroma oil) manufactured by Idemitsu Kosan Co., Ltd.
(b-5) Silane coupling agent: Si266 manufactured by Evonik Industries (bis (3-triethoxysilylpropyl) disulfide)
(b-6) Resin: SYLVATRAXX4401 manufactured by Kraton (a-methylstyrene resin)
(b-7) Liquid rubber: RICON 100 manufactured by Cray Valley Co. Ltd. (random copolymer SBR; styrene content: 25% by mass, vinyl content: 70%)
(b-8) Zinc oxide: 2 types of zinc oxide manufactured by Mitsui Mining & Smelting Co., Ltd.
(b-9) Stearic acid: bead stearic acid "Tsubaki" manufactured by NOF Corporation
(b-10) Wax: Sannok N manufactured by Ouchi Shinko Chemical Industry Co., Ltd.
(b-11) Anti-aging agent-1: Antigen 6C manufactured by Sumitomo Chemical Co., Ltd. (N-(1,3-dimethylbutyl)-N'-phenyl-p-phenylenediamine)
(b-12) Anti-aging agent-2: Antigen RD manufactured by Sumitomo Chemical Co., Ltd. (Polymer of 2,2,4-trimethyl-1,2-dihydroquinoline)
(b-13) Sulfur: powdered sulfur (containing 5% oil) manufactured by Tsurumi Chemical Industry Co., Ltd.
(b-14) Vulcanization accelerator-1: Nocceler CZ manufactured by Ouchi Shinko Chemical Industry Co., Ltd. (N-cyclohexyl-2-benzothiazylsulfenamide (CBS))
(b-15) Vulcanization accelerator-2: Soxinol D (DPG) manufactured by Sumitomo Chemical Co., Ltd. (N,N'-diphenylguanidine)

(2) Rubber composition forming cap rubber layer

Using a Banbury mixer, materials other than sulfur and a vulcanization accelerator are kneaded at 150°C for 5 minutes according to the formulations shown in Tables 2 to 5 to obtain a kneaded product. Note that, each compounding quantity is a mass part.

Next, sulfur and a vulcanization accelerator are added to the kneaded product, and kneaded at 80°C for 5 minutes using an open roll to obtain a rubber composition forming a cap rubber layer.

2. Manufacture of rubber composition forming base rubber layer

In parallel, a rubber composition for forming the base rubber layer is obtained based on the formulation shown in Table 1 in the same manner as the rubber composition for forming the cap rubber layer.

[Table 1]

| Compounding material | Compounding amount (parts by mass) |
|---|---|
| NR(TSR20) | 70 |
| BR (UBEPOL-BR150B manufactured by Ube Industries, Ltd.) | 30 |
| Carbon black (Show Black N330T manufactured by Cabot Japan Co., Ltd.) | 35 |
| Stearic acid ("Tsubaki" stearic acid manufactured by NOF Corporation) | 2 |
| Zinc oxide (Zinc white No.1 manufactured by Mitsui Mining & Smelting Co., Ltd.) | 4 |
| Wax (Sannok wax manufactured by Ouchi Shinko Chemical Co., Ltd.) | 2 |
| Antiaging agent (Nocrac 6C manufactured by Ouchi Shinko Chemical Industry Co., Ltd) | 3 |
| Antiaging agent (Antage RD manufactured by Kawaguchi Chemical Industry Co., Ltd.) | 1 |
| Sulfur (powder sulfur manufactured by Tsurumi Chemical Industry Co., Ltd.) | 1.7 |
| Vulcanization accelerator (Nocceler CZ-G manufactured by Ouchi Shinko Chemical Industry Co., Ltd.) | 1.2 |

3. Cap rubber and pneumatic tire

Using each rubber composition, the rubber composition is extruded in a predetermined shape so that (thickness of cap rubber layer (mm) / thickness of base rubber layer (mm)) and the thickness are the value shown in Tables 2 to 5 to manufacture the tread portion.

After that, an unvulcanized tire was formed by pasting the tread portion together with other tire members, press vulcanized for 10 minutes at 170°C, and each pneumatic tire (test tire) of Examples 1 to 1 7 and Comparative examples 1 to 8 shown in Tables 2 to 5 is manufactured.

4. Calculation of parameters

The following parameters are then determined for each test tire.

(1) 30°CTan δ

From the cap rubber layer of the tread portion of each test tire, a rubber test piece for viscoelasticity measurement is prepared by cutting a piece of length 20 mm × width 4 mm × thickness 2 mm so that the tire circumferential direction is the long side. For the rubber test piece, 30°C tan δ is measured using Eplexor series manufactured by GABO under the conditions of temperature of 30°C, frequency of 10Hz, initial strain of 5%, dynamic strain of 1%, and deformation mode: tensile. The thickness direction of the sample is the radial direction of the tire. The 30°Ctan δ of the base rubber layer is 0.07.

(2) Complex elastic modulus

For the rubber test piece for viscoelasticity measurement prepared in the same manner as above, using Eplexor series manufactured by GABO under the conditions of temperature 30 °C, frequency 10 Hz, initial strain 5%, dynamic strain 1%, and deformation mode: tensile, the complex elastic modulus (MPa) is measured. Also, the complex elastic modulus of the base rubber layer is set to 4.0 MPa.

(3) Acetone extractable content (AE) of cap rubber layer

Using a vulcanized rubber test piece prepared by cutting out from the cap rubber layer of the tread portion of each test tire, AE (% by mass) is determined according to JIS K 6229:2015.

(4) 30°C tan δ / tread thickness

30°C tan δ / tread thickness is obtained based on 30°C tan δ and the thickness (mm) of the tread portion.

(5) Styrene content in rubber component / tread thickness

Based on the styrene content (% by mass) in the rubber component and the thickness (mm) of the tread portion, the styrene content in the rubber component / tread thickness is determined.

5. Performance evaluation test (evaluation of steering stability during high-speed running)

Each test tire is installed on all wheels of a vehicle (domestic FF vehicle, displacement 2000cc), and filled with air so that the internal pressure is 250kPa (standardized internal pressure for passenger cars). After the break-in, the actual vehicle is driven at approximately 120 km/h on a test course with dry road surface, and the stability of control during steering is sensorily evaluated by each of 20 drivers on a 5-point scale (the higher the value, the better). Then, the total points of the evaluations by the 20 drivers are calculated.

Then, taking the result of Comparative Example 5 as 100, it is index ed based on the following formula to evaluate steering stability during high-speed running on a dry road surface. The larger the value, the better the st eering stability during high-speed running on a dry road.

$$\text{Steering stability at high-speed running on a dry road} = [(\text{result of test tire}) / (\text{result of comparative example 5})] \times 100$$

[Table 2]

| Example No. | EXAMPLE | | | | | | |
|---|---|---|---|---|---|---|---|
| | 1 | 2 | 3 | 4 | 5 | 6 | 7 |
| Formulation of cap rubber layer | | | | | | | |
| NR | 20 | 20 | 20 | 20 | 50 | 20 | 20 |
| SBR-1 | 60 | 60 | - | 60 | 40 | 60 | - |
| SBR-2 | - | - | - | - | - | - | - |
| (for rubber portion) | (-) | (-) | (-) | (-) | (-) | (-) | (-) |
| (for oil-extended oil) | (-) | (-) | (-) | (-) | (-) | (-) | (-) |
| SBR-3 | - | - | 60 | - | - | - | 60 |
| BR | 20 | 20 | 20 | 20 | 10 | 20 | 20 |
| Carbon black | 5 | 5 | 5 | 5 | 5 | 5 | 5 |
| Silica-1 | 100 | 100 | 100 | 100 | 100 | 100 | 100 |
| Silica-2 | - | - | - | - | - | - | - |
| Oil | 25 | 25 | 20 | 35 | 30 | 25 | 20 |
| Silane coupling agent | 8 | 8 | 8 | 8 | 8 | 8 | 8 |
| Resin | 35 | 35 | 45 | 20 | 25 | 35 | 45 |
| Liquid rubber | - | - | - | - | - | - | - |
| Zinc oxide | 3 | 3 | 3 | 3 | 3 | 3 | 3 |
| Stearic acid | 2 | 2 | 2 | 2 | 2 | 2 | 2 |
| WAX | 1.5 | 1.5 | 1.5 | 1.5 | 1.5 | 1.5 | 1.5 |
| Anti-aging agent-1 | 2 | 2 | 2 | 2 | 2 | 2 | 2 |

(continued)

| Example No. | EXAMPLE | | | | | | |
|---|---|---|---|---|---|---|---|
| | 1 | 2 | 3 | 4 | 5 | 6 | 7 |
| Formulation of cap rubber layer | | | | | | | |
| Anti-aging agent-2 | 1 | 1 | 1 | 1 | 1 | 1 | 1 |
| Sulfur | 1.5 | 1.5 | 1.5 | 1.5 | 1.5 | 1.5 | 1.5 |
| Vulcanization accelerator-1 | 2 | 2 | 2 | 2 | 2 | 2 | 2 |
| Vulcanization accelerator-2 | 2.5 | 2.5 | 2.5 | 2.5 | 2.5 | 2.5 | 2.5 |
| Parameter | | | | | | | |
| Styrene content in SBR (% by mass) | 25 | 25 | 10 | 25 | 25 | 25 | 10 |
| Styrene content in rubber component (% by mass) | 15 | 15 | 6 | 15 | 10 | 15 | 6 |
| 30°C tan δ | 0.28 | 0.28 | 0.28 | 0.24 | 0.28 | 0.28 | 0.28 |
| Complex elastic modulus (MPa) | 10.3 | 10.3 | 10.4 | 10.2 | 10.8 | 10.3 | 10.4 |
| AE (% by mass) | 24.5 | 24.5 | 26.0 | 23.2 | 23.4 | 24.5 | 26.0 |
| Tread thickness (mm) | 8.5 | 8.5 | 8.5 | 8.5 | 8.5 | 7 | 7 |
| 30°Ctan δ / tread thickness (mm) | 0.033 | 0.033 | 0.033 | 0.028 | 0.033 | 0.040 | 0.040 |
| Styrene content in rubber component (% by mass) × tread thickness (mm) | 127.5 | 127.5 | 51.0 | 127.5 | 85.0 | 105.0 | 42.0 |
| Cap rubber thickness / base rubber thickness | 10/0 | 8/2 | 8/2 | 8/2 | 8/2 | 8/2 | 8/2 |
| Performance evaluation | | | | | | | |
| Steering stability at high- speed running | 110 | 116 | 120 | 114 | 114 | 120 | 124 |

[Table 3]

| Example No. | EXAMPLE | | | | | | |
|---|---|---|---|---|---|---|---|
| | 8 | 9 | 10 | 11 | 12 | 13 | 14 |
| Formulation of cap rubber layer | | | | | | | |
| NR | 20 | 20 | 20 | 20 | 20 | 20 | 20 |
| SBR-1 | 60 | 60 | - | 60 | 60 | - | 60 |
| SBR-2 | - | - | - | - | - | - | - |
| (for rubber portion) | (-) | (-) | (-) | (-) | (-) | (-) | (-) |
| (for oil-extended oil) | (-) | (-) | (-) | (-) | (-) | (-) | (-) |
| SBR-3 | - | - | 60 | - | - | 60 | - |
| BR | 20 | 20 | 20 | 20 | 20 | 20 | 20 |
| Carbon black | 5 | 5 | 5 | 5 | 5 | 5 | 5 |
| Silica-1 | 120 | 120 | 120 | 120 | - | - | 120 |
| Silica-2 | - | - | - | 120 | 120 | 120 | - |
| Oil | 40 | 40 | 35 | 40 | 40 | 35 | 25 |
| Silane coupling agent | 9.6 | 9.6 | 9.6 | 9.6 | 12 | 12 | 9.6 |
| Resin | 35 | 35 | 45 | 35 | 35 | 45 | 35 |
| Liquid rubber | - | - | - | - | - | - | 15 |

(continued)

| Formulation of cap rubber layer | | | | | | | |
|---|---|---|---|---|---|---|---|
| Zinc oxide | 3 | 3 | 3 | 3 | 3 | 3 | 3 |
| Stearic acid | 2 | 2 | 2 | 2 | 2 | 2 | 2 |
| WAX | 1.5 | 1.5 | 1.5 | 1.5 | 1.5 | 1.5 | 1.5 |
| Anti-aging agent-1 | 2 | 2 | 2 | 2 | 2 | 2 | 2 |
| Anti-aging agent-2 | 1 | 1 | 1 | 1 | 1 | 1 | 1 |
| Sulfur | 1.5 | 1.5 | 1.5 | 1.5 | 1.5 | 1.5 | 1.5 |
| Vulcanization accelerator-1 | 2 | 2 | 2 | 2 | 2 | 2 | 2 |
| Vulcanization accelerator-2 | 2.8 | 2.8 | 2.8 | 2.8 | 2.8 | 2.8 | 2.8 |
| Parameter | | | | | | | |
| Styrene content in SBR (% by mass) | 25 | 25 | 10 | 25 | 25 | 10 | 25 |
| Styrene content in rubber c omponent (% by mass) | 15 | 15 | 6 | 15 | 15 | 6 | 15 |
| 30°C tan δ | 0.32 | 0.32 | 0.32 | 0.32 | 0.33 | 0.33 | 0.37 |
| Complex elastic modulus (MPa) | 11.4 | 11.4 | 11.6 | 11.4 | 14.6 | 14.8 | 12.1 |
| AE (% by mass) | 26.4 | 26.4 | 27.7 | 26.4 | 26.4 | 27.5 | 25.5 |
| Tread thickness (mm) | 8.5 | 8.5 | 8.5 | 8.5 | 8.5 | 8.5 | 8.5 |
| 30°C tan δ / tread thickness (mm) | 0.038 | 0.038 | 0.038 | 0.038 | 0.039 | 0.039 | 0.044 |
| Styrene content in rubber component (% by mass) × tread thickness (mm) | 127.5 | 127.5 | 51.0 | 127.5 | 127.5 | 51.0 | 127.5 |
| Cap rubber thickness / base rubber thickness | 8/2 | 7/3 | 7/3 | 1/9 | 7/3 | 7/3 | 7/3 |
| Performance evaluation | | | | | | | |
| Steering stability at high-speed running | 122 | 124 | 128 | 112 | 128 | 132 | 130 |

[Table 4]

| Example No. | EXAMPLE | | |
|---|---|---|---|
| | 15 | 16 | 17 |
| Formulation of cap rubber layer | | | |
| NR | 30 | 20 | 20 |
| SBR-1 | 40 | 60 | 60 |
| SBR-2 | - | - | - |
| (for rubber portion) | (-) | (-) | (-) |
| (for oil-extended oil) | (-) | (-) | (-) |
| SBR-3 | - | - | - |
| BR | 30 | 20 | 20 |
| Carbon black | 5 | 5 | 5 |
| Silica-1 | 100 | 100 | 100 |
| Silica-2 | - | - | - |
| Oil | 25 | 25 | 15 |

(continued)

| Example No. | EXAMPLE | | |
|---|---|---|---|
| | 15 | 16 | 17 |
| Formulation of cap rubber layer | | | |
| Silane coupling agent | 8 | 8 | 8 |
| Resin | 35 | 35 | 25 |
| Liquid rubber | - | - | - |
| Zinc oxide | 3 | 3 | 3 |
| Stearic acid | 2 | 2 | 2 |
| WAX | 1.5 | 1.5 | 1.5 |
| Anti-aging agent-1 | 2 | 2 | 2 |
| Anti-aging agent-2 | 1 | 1 | 1 |
| Sulfur | 1.5 | 1.5 | 1.5 |
| Vulcanization accelerator-1 | 2 | 2 | 2 |
| Vulcanization accelerator-2 | 2.5 | 2.5 | 2.5 |
| Parameter | | | |
| Styrene content in SBR (% by mass) | 25 | 25 | 25 |
| Styrene content in rubber c omponent (% by mass) | 10 | 15 | 15 |
| 30°C tan δ | 0.27 | 0.28 | 0.26 |
| Complex elastic modulus (MPa) | 10.5 | 10.3 | 14.1 |
| AE (% by mass) | 24.5 | 24.5 | 18.9 |
| Tread thickness (mm) | 8.5 | 7 | 8.5 |
| 30°C tan δ / tread thickness (mm) | 0.032 | 0.040 | 0.031 |
| Styrene content in rubber component (% by mass) × tread thickness (mm) | 85 | 105 | 127.5 |
| Cap rubber thickness / base rubber thickness | 10/0 | 10/0 | 10/0 |
| Performance evaluation | | | |
| Steering stability at high-speed running | 112 | 115 | 108 |

[Table 5]

| Comparative example No. | COMPARATIVE EXAMPLE | | | | |
|---|---|---|---|---|---|
| | 1 | 2 | 3 | 4 | 5 |
| Formulation of cap rubber layer | | | | | |
| NR | 20 | 20 | 20 | 20 | 20 |
| SBR-1 | 0 | 60 | 0 | | 0 |
| SBR-2 | 82.5 | 0 | 82.5 | 82.5 | 82.5 |
| (for rubber portion) | (60) | (-) | (60) | (60) | (60) |
| (for oil-extended oil) | (22.5) | (-) | (22.5) | (22.5) | (22.5) |
| SBR-3 | - | - | - | - | - |
| BR | 20 | 20 | 20 | 20 | 20 |

(continued)

| Comparative example No. | COMPARATIVE EXAMPLE | | | | |
|---|---|---|---|---|---|
| | 1 | 2 | 3 | 4 | 5 |
| Formulation of cap rubber layer | | | | | |
| Carbon black | 5 | 5 | 5 | 5 | 5 |
| Silica-1 | 70 | 70 | 100 | 70 | 90 |
| Silica-2 | - | - | - | - | - |
| Oil | 10 | 15 | 35 | 10 | - |
| Silane coupling agent | 5.6 | 5.6 | 8 | 5.6 | 7.2 |
| Resin | - | 20 | - | - | 30 |
| Liquid rubber | - | - | - | - | - |
| Zinc oxide | 3 | 3 | 3 | 3 | 3 |
| Stearic acid | 2 | 2 | 2 | 2 | 2 |
| WAX | 1.5 | 1.5 | 1.5 | 1.5 | 1.5 |
| Anti-aging agent-1 | 2 | 2 | 2 | 2 | 2 |
| Anti-aging agent-2 | 1 | 1 | 1 | 1 | 1 |
| Sulfur | 1.5 | 1.5 | 1.5 | 1.5 | 1.5 |
| Vulcanization accelerator-1 | 2 | 2 | 2 | 2 | 2 |
| Vulcanization accelerator-2 | 2.2 | 2.2 | 2.5 | 2.2 | 2.4 |
| Parameter | | | | | |
| Styrene content in SBR (% by mass) | 40 | 25 | 40 | 40 | 40 |
| Styrene content in rubber c omponent (% by mass) | 33 | 15 | 33 | 33 | 33 |
| 30°C tan $\delta$ | 0.18 | 0.18 | 0.24 | 0.18 | 0.3 |
| Complex elastic modulus (Mpa) | 9.2 | 7.6 | 11.2 | 9.2 | 12.3 |
| AE (% by mass) | 18.8 | 19.7 | 23.9 | 18.8 | 23.4 |
| Tread thickness (mm) | 11 | 11 | 11 | 8.5 | 11 |
| 30°C tan $\delta$/tread thickness (mm) | 0.016 | 0.016 | 0.022 | 0.021 | 0.027 |
| Styrene content in rubber component (% by mass) $\times$ tread thickness (mm) | 363.0 | 165.0 | 363.0 | 280.5 | 363.0 |
| Cap rubber thickness/base rubber thickness | 8/2 | 8/2 | 8/2 | 8/2 | 8/2 |
| Performance evaluation | | | | | |
| Steering stability at high-speed running | 94 | 98 | 98 | 96 | 100 |

Although the present invention has been described above based on the embodiments, the present invention is not limited to the above embodiments. Various modifications can be made to the above embodiment within the same and equivalent scope of the present invention.

The present invention (1) is

a tire having a tread portion, wherein

the cap rubber layer forming the tread portion is formed from a rubber composition containing 40 parts by mass or more and 60 parts by mass or less of styrene-butadiene rubber (SBR) with a styrene content of 25% by mass or less in 100 parts by mass of the rubber component, and 100 parts by mass or more of silica with respect to 100

parts by mass of the rubber component; and
the tread portion has a thickness of 8.5 mm or less.

The present invention (2) is
the tire according to the present invention (1), wherein the tread portion has a thickness of 7.0 mm or less.
The present invention (3) is
the tire according to the present invention (1) or (2), wherein the loss tangent (30°C tan δ) of the rubber composition forming the cap rubber layer measured under the conditions of 30°C, frequency of 10 Hz, initial strain of 5%, dynamic strain rate of 1%, and deformation mode: tensile, is 0.20 or more.
The present invention (4) is
the tire of any combination of the present inventions (1) to (3), wherein the silica contained in the cap rubber layer has a particle size of 17 nm or less.
The present invention (5) is
the tire of any combination of the present inventions (1) to (4), wherein the cap rubber layer contains any resin component selected from the group consisting of rosin-based resin, styrene-based resin, coumarone-based resin, terpene-based resin, C5 resin, C9 resin, C5C9 resin, and acrylic resin.
The present invention (6) is
the tire of any combination of the present inventions (1) to (5), wherein the acetone extractable content (AE) of the cap rubber layer is 19% by mass or more.
The present invention (7) is
the tire according to the present invention (6), wherein the acetone extractable content (AE) of the cap rubber layer is 20% by mass or more.
The present invention (8) is
the tire of any combination of the present inventions (1) to (7), wherein the tread portion is formed from the cap rubber layer and a base rubber layer forming an inner layer.
The present invention (9) is
the tire of any combination of the present inventions (1) to (8), wherein 30°C tan δ of the cap rubber layer and the thickness (mm) of the entire tread portion satisfy the following formula.

$$30°\mathrm{C}\ \tan\delta\ /\ \text{thickness of entire tread portion} > 0.03$$

The present invention (10) is
the tire of any combination of the present inventions (1) to (9), wherein the thickness of the cap rubber layer with respect to the thickness of the entire tread portion is 10% or more and less than 100%.
The present invention (11) is
the tire of any combination of the present inventions (8) to (10), wherein 30°Ctan δ in the base rubber layer is smaller than 30°Ctan δ in the cap rubber layer.
The present invention (12) is
the tire of any combination of the present inventions (9) to (11), wherein the complex modulus of the cap rubber layer measured under the conditions of a temperature of 30°C, a frequency of 10 Hz, an initial strain of 5%, a dynamic strain rate of 1%, and a deformation mode: tensile is larger than the complex modulus of the base rubber layer measured under the same conditions.
The present invention (13) is
the tire of any combination of the present inventions (1) to (12), wherein the land ratio in the tread portion is 55% or more and 90% or less.
The present invention (14) is
the tire of any combination of the present inventions (1) to (13), wherein the aspect ratio of the tire is 30% or more and 60% or less.
The present invention (15) is
the tire of any combination of the present inventions (1) to (14), wherein the product of the styrene content (% by mass) contained in 100 parts by mass of the rubber component of the cap rubber layer and the thickness (mm) of the tread portion (styrene content × thickness) is 120 or less.

**Claims**

1. A tire having a tread portion, wherein

the cap rubber layer forming the tread portion is formed from a rubber composition containing 40 parts by mass or more and 60 parts by mass or less of styrene-butadiene rubber (SBR) with a styrene content of 25% by mass or less in 100 parts by mass of the rubber component, and 100 parts by mass or more of silica with respect to 100 parts by mass of the rubber component; and
the tread portion has a thickness of 8.5 mm or less.

**2.** The tire according to claim 1, wherein the tread portion has a thickness of 7.0 mm or less.

**3.** The tire according to claim 1 or 2, wherein the loss tangent (30°Ctan δ) of the rubber composition forming the cap rubber layer measured under the conditions of 30°C, frequency of 10 Hz, initial strain of 5%, dynamic strain rate of 1%, and deformation mode: tensile, is 0.20 or more.

**4.** The tire according to any one of claims 1-3, wherein the silica contained in the cap rubber layer has a particle size of 17 nm or less.

**5.** The tire according to any one of claims 1-4, wherein the cap rubber layer contains any resin component selected from the group consisting of rosin-based resin, styrene-based resin, coumarone-based resin, terpene-based resin, C5 resin, C9 resin, C5C9 resin, and acrylic resin.

**6.** The tire according to any one of claims 1-5, wherein the acetone extractable content (AE) of the cap rubber layer is 19% by mass or more.

**7.** The tire according to claim 6, wherein the acetone extractable content (AE) of the cap rubber layer is 20% by mass or more.

**8.** The tire according to any one of claims 1-7, wherein the tread portion is formed from the cap rubber layer and a base rubber layer forming an inner layer.

**9.** The tire according to any one of claims 1-8, wherein 30°C tan δ of the cap rubber layer and the thickness (mm) of the entire tread portion satisfy the following formula.

$$30°\text{C} \tan\delta \,/\, \text{thickness of entire tread portion} > 0.03$$

**10.** The tire according to any one of claims 1-9, wherein the thickness of the cap rubber layer with respect to the thickness of the entire tread portion is 10% or more and less than 100%.

**11.** The tire according to any one of claims 8-10, wherein 30°Ctan δ in the base rubber layer is smaller than 30°Ctan δ in the cap rubber layer.

**12.** The tire according to any one of claims 9-11, wherein the complex modulus of the cap rubber layer measured under the conditions of a temperature of 30°C, a frequency of 10 Hz, an initial strain of 5%, a dynamic strain rate of 1%, and a deformation mode: tensile is larger than the complex modulus of the base rubber layer measured under the same conditions.

**13.** The tire according to any one of claims 1-12, wherein the land ratio in the tread portion is 55% or more and 90% or less.

**14.** The tire according to any one of claims 1-13, wherein the aspect ratio of the tire is 30% or more and 60% or less.

**15.** The tire according to any one of claims 1-14, wherein the product of the styrene content (% by mass) contained in 100 parts by mass of the rubber component of the cap rubber layer and the thickness (mm) of the tread portion (styrene content × thickness) is 120 or less.

Europäisches Patentamt
European Patent Office
Office européen des brevets

# EUROPEAN SEARCH REPORT

Application Number
EP 23 17 3425

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 3 744 776 A1 (SUMITOMO RUBBER IND [JP]) 2 December 2020 (2020-12-02)<br>* paragraph [0020] *<br>* paragraph [0159] *<br>* paragraph [0005]; examples 21-24; table 3 *<br>----- | 1-15 | INV.<br>B60C1/00<br>C08C19/22<br>C08C19/44<br>C08F236/06<br>C08F236/10<br>C08L7/00<br>C08L15/00<br>C08L9/06 |
| A | WO 2021/215278 A1 (SUMITOMO RUBBER IND [JP]) 28 October 2021 (2021-10-28)<br>* the whole document *<br>& EP 4 137 331 A1 (SUMITOMO RUBBER IND [JP]) 22 February 2023 (2023-02-22)<br>* paragraph [0005] *<br>* paragraph [0109] *<br>* paragraph [0112] *<br>* paragraph [0113] *<br>* tables 1, 4 *<br>----- | 1-15 | |
| | | | TECHNICAL FIELDS SEARCHED (IPC) |
| | | | B60C<br>C08C<br>C08F<br>C08L |

The present search report has been drawn up for all claims

2

| Place of search | Date of completion of the search | Examiner |
|---|---|---|
| Munich | 27 October 2023 | Laïb, Samia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 23 17 3425

This annex lists the patent family members relating to the patent documents cited in the above-mentioned European search report.
The members are as contained in the European Patent Office EDP file on
The European Patent Office is in no way liable for these particulars which are merely given for the purpose of information.

27-10-2023

| Patent document cited in search report | Publication date | Patent family member(s) | Publication date |
|---|---|---|---|
| EP 3744776 A1 | 02-12-2020 | NONE | |
| WO 2021215278 A1 | 28-10-2021 | CN 115038596 A | 09-09-2022 |
| | | EP 4137331 A1 | 22-02-2023 |
| | | JP 6863503 B1 | 21-04-2021 |
| | | JP 2021172212 A | 01-11-2021 |
| | | US 2023219370 A1 | 13-07-2023 |
| | | WO 2021215278 A1 | 28-10-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011093386 A
- JP 2013079017 A
- JP 2014133845 A
- JP 2016037100 A
- JP 2010111753 A
- US 4414370 B
- JP 59006207 A
- JP 5058805 B
- JP 1313522 A
- US 5010166 B


### Non-patent literature cited in the description


- **TOA.** *Synthetic Research Annual Report TREND,* 2000, vol. 3, 42-45